**Europäisches Patentamt**

**European Patent Office**

**Office européen des brevets**

(19)

(11) Numéro de publication: **0 189 721
B1**

(12) **FASCICULE DE BREVET EUROPEEN**

(45) Date de publication du fascicule du brevet:
26.07.89

(21) Numéro de dépôt: **85402654.9**

(22) Date de dépôt: **30.12.85**

(51) Int. Cl.⁴: **G 01 B 7/315,** G 01 B 5/255,
G 01 B 7/30

(54) **Procédé et dispositif de mesure de l'angle de braquage d'une roue avant de véhicule automobile.**

(30) Priorité: **31.12.84 FR 8420104**

(43) Date de publication de la demande:
**06.08.86 Bulletin 86/32**

(45) Mention de la délivrance du brevet:
**26.07.89 Bulletin 89/30**

(84) Etats contractants désignés:
**DE GB IT SE**

(56) Documents cités:
**FR-A- 2 494 834
FR-A- 2 522 136
GB-A- 2 046 920
GB-A- 2 057 144
US-A- 4 204 333
US-A- 4 347 668**

(73) Titulaire: **FACOM, Société dite:, 6 et 8 Rue Gustave
Eiffel, F-91423 Morangis (FR)**

(72) Inventeur: **Dossier, Michel, 12 Rue Singer, F-75016 Paris
(FR)**

(74) Mandataire: **Polus, Camille et al, c/o Cabinet
Lavoix 2, Place d'Estienne d'Orves, F-75441 Paris
Cedex 09 (FR)**

## Description

La présente invention concerne la mesure des angles de braquage de chacune des roues directrices d'un véhicule automobile à partir d'une position de référence, et notamment à partir de leur position en configuration de marche en ligne droite ou configuration de braquage nul.

La détermination des angles de braquage des roues directrices d'un véhicule est nécessaire, comme on le sait, pour contrôler et régler l'épure de direction suivant les spécifications du constructeur.

La détermination de ces angles, ou tout au moins de l'amplitude de leur variation entre deux configurations de braquage sensiblement symétriques, intervient d'autre part dans la procédure classique de mesure et de calcul des angles de chasse et de pivot, en phase de contrôle comme en phase de réglage.

Actuellement, la détermination des angles de braquage des roues directrices est généralement faite sur des plateaux tournants qui comportent, soit une échelle graduée permettant la lecture de leurs angles de rotation, soit des capteurs électriques mesureurs d'angles, tel que décrit par exemple dans le FR-A-2 484 632.

Cette façon d'opérer présente plusieurs inconvénients:

– le premier inconvénient est que la mise en place des roues à contrôler sur les plateaux est une opération relativement longue et délicate; il faut d'abord placer ces plateaux, dûment bloqués, en face des roues, ensuite faire avancer le véhicule avec précaution pour placer et centrer les roues sur ces plateaux, et il faut enfin les débloquer pour qu'ils puissent tourner librement avec les roues;

– le deuxième inconvénient est que la rotation des plateaux ne suit pas toujours fidèlement celle des roues, à cause notamment des déformations des pneumatiques induites par les modifications de carrossage provoquées précisément par les braquages qu'il s'agit de mesurer;

– enfin, le troisième inconvénient est que l'opérateur ne possède aucun repère pour régler la direction en configuration de marche en ligne droite, c'est-à-dire de braquage nul, ce qui fait qu'il ne peut régler le zéro des plateaux que de façon très approximative.

Pour le contrôle du parallélisme et de l'alignement, on utilise de manière connue (GB-A 2 057 144, FR-A 2 522 136) des dispositifs comportant un certain nombre d'appareils de mesure d'angles qui sont montés sur les roues ou sur des organes annexes. Les dispositifs sont bien adaptés à une mesure statique mais sont difficilement adaptables à la mesure de l'angle de braquage qui suppose un pivotement de la roue avec les modifications de carrossage et autre qui en découle.

La présente invention a pour but de remédier à ces inconvénients, c'est-à-dire de supprimer ces opérations longues, délicates et incertaines, et de permettre une mesure immédiate et précise des variations de braquage d'une roue entre diverses positions, et notamment la mesure de tous braquages à partir de la configuration de marche en ligne droite.

Cette invention a en effet pour objet un procédé de mesure de l'angle de braquage de l'une ou l'autre des roues avant d'un véhicule automobile à partir d'une position de référence, qui consiste à monter de manière connue en soi un premier dispositif électrique mesureur d'angle sur cette roue, un second dispositif électrique mesureur d'angle, sensiblement à la même hauteur, sur un support immobile par rapport au véhicule, et entre ces dispositifs mesureurs un fil tendu, sensiblement horizontal, à déterminer la somme des deux angles mesurés dans une première orientation de la roue, choisie comme position de référence, puis dans une deuxième orientation correspondant à sa position de contrôle, à déterminer la variation de cette somme entre les deux positions, et à en déduire l'angle de braquage qui est égal et de signe contraire à cette variation, étant admis que le braquage est positif dans le sens du pincement.

On obtient ainsi très rapidement, sans manœuvre complexe ni installation particulière, une mesure précise des amplitudes de variation des angles de braquage entre toutes les orientations désirées de l'une ou l'autre des roues avant.

Bien entendu, la position de référence peut être choisie en fonction du type de contrôle à effectuer et peut notamment être constituée par la position de braquage nul ou configuration de marche en ligne droite.

Selon un mode de mise en œuvre préféré de l'invention, on détermine alors préalablement cette configuration de marche en ligne droite en montant sur les deux roues avant des dispositifs mesureurs d'angle, de constructions symétriques, en fixant également à la même hauteur deux dispositifs mesureurs d'angle de constructions symétriques sur les roues arrière, en reliant les deux dispositifs mesureurs d'angle situés d'un même côté par un fil tendu sensiblement horizontal, qui délimite avec un axe de référence de chaque dispositif mesureur d'angle l'angle mesuré par celui-ci, en comparant les sommes des deux angles mesurés de chaque côté du véhicule et en déplaçant les roues jusqu'au moment où les deux sommes sont égales, ce qui correspond au braquage nul.

Les variations de l'angle de braquage à partir de cette position donnent les valeurs de l'angle de braquage par rapport à l'axe de marche. On peut donc obtenir facilement la valeur de l'angle de braquage pour toute position du volant, sans craindre d'imprécisions dues au manque de repère ou à l'influence des pneumatiques.

L'invention s'étend également à un dispositif de contrôle de train roulant permettant la mise en œuvre du procédé ci-dessus.

Ce dispositif comportant deux dispositifs électriques mesureurs d'angle, qui sont reliés entre eux par un organe tendu et qui sont montés sensiblement dans le même plan horizontal, l'un de ces dispositifs étant relié rigidement à la roue à contrôler, tandis que l'autre est relié rigidement à un support immobile par rapport au véhicule, caractérisé en ce qu'il comporte des moyens de mesure de la somme des angles mesurés par les deux dispositifs mesureurs d'angle pour chaque orientation de la roue, et des moyens de détermination de la variation de cette somme qui correspond à la variation de l'angle de braquage.

Selon une variante de réalisation, le dispositif comporte deux paires de dispositifs mesureurs d'angle reliés par un organe tendu, une pour chaque côté du véhicule.

La description ci-dessous de modes de réalisation donnés à titre d'exemples non limitatifs, et représentés aux dessins annexés, fera d'ailleurs ressortir les avantages et caractéristiques de l'invention.

Sur ces dessins:
— la fig. 1 est une vue schématique de dessus d'un véhicule automobile muni d'un dispositif de mesure de l'angle de braquage de sa roue avant droite;
— la fig. 2 est une vue en perspective, à plus grande échelle, avec arrachement partiel, du dispositif de mesure de la figure 1;
— la fig. 3 est une vue schématique, en plan, d'un véhicule automobile équipé de chaque côté d'un dispositif de mesure suivant l'invention;
— la fig. 4 est une vue schématique, en plan, d'un véhicule automobile équipé de deux dispositifs de mesure destinés à son réglage en configuration de marche en ligne droite.

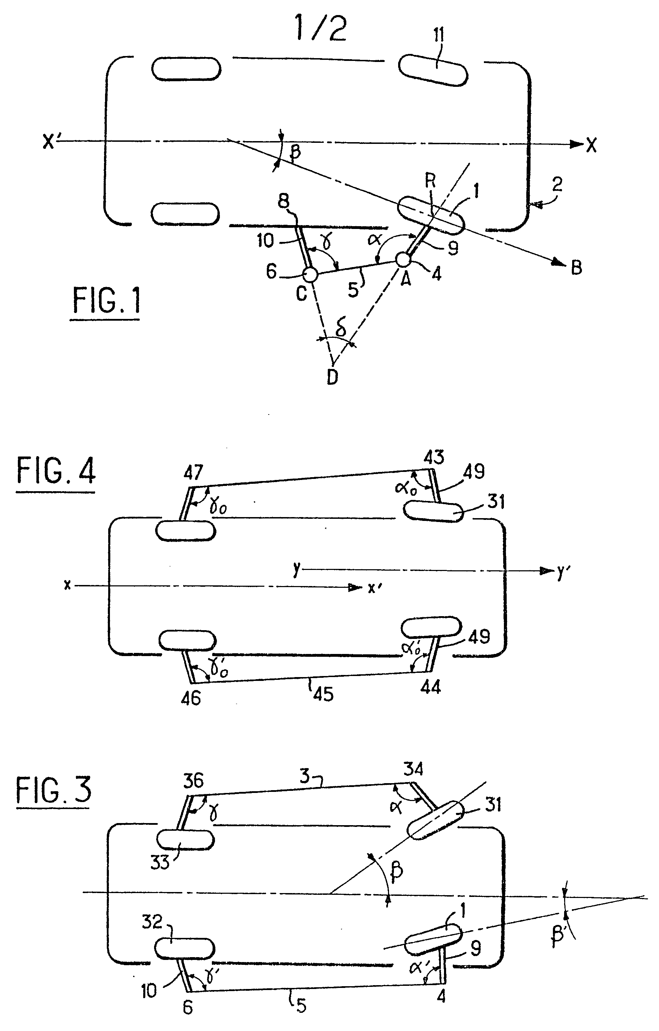

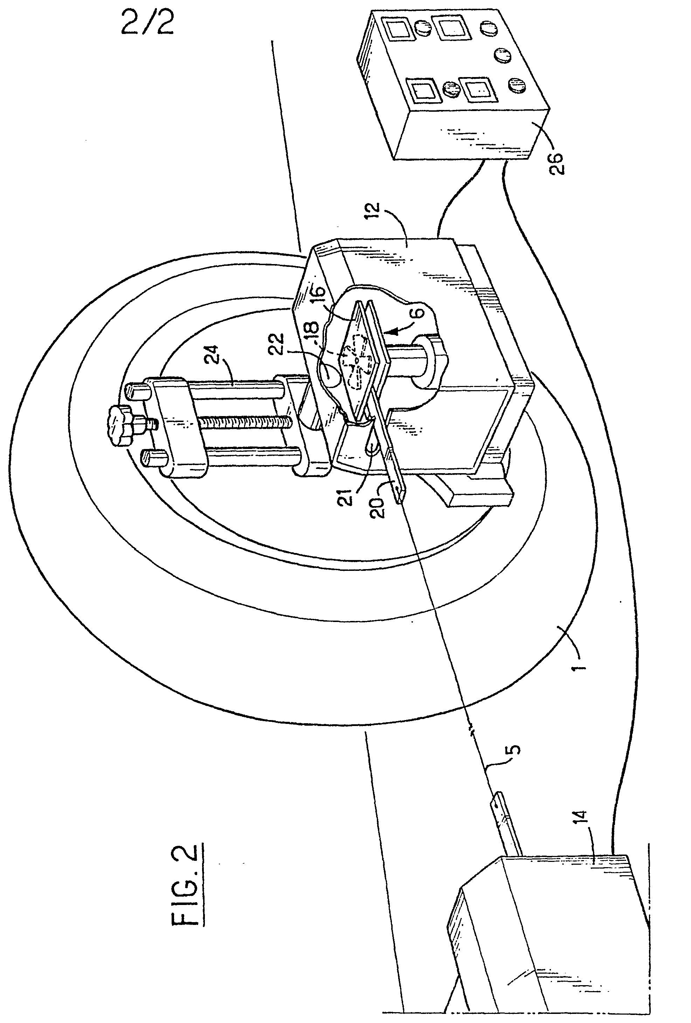

Comme le montre la figure 1, pour mesurer les variations de l'angle de braquage β de la roue avant droite 1 d'un véhicule automobile 2, on fixe sur cette roue un dispositif électrique mesureur d'angle 4, qui peut être de tout type approprié, par exemple potentiométrique, électromagnétique, électrostatique, ou autre. Ce dispositif ou capteur 4 est relié par un fil tendu 5 à un second dispositif électrique mesureur d'angle 6, qui est fixé à un point du véhicule, par exemple, comme représenté sur la figure 1, à un point 8 de la caisse de ce dernier. Les capteurs 4 et 6 sont montés sensiblement à la même hauteur de sorte que le fil 5 est pratiquement horizontal. Ce fil 5 définit ainsi avec un axe de référence 9, 10 de chacun des capteurs 4 et 6, un angle respectivement $\alpha$ et $\gamma$, qui est mesuré par le capteur correspondant.

Le capteur 4 est monté sur la roue de manière à permettre à celle-ci de tourner indépendamment de lui, mais à suivre tous ses changements d'orientation. En conséquence, lors de modifications de l'angle de braquage de la roue à contrôler, l'axe de référence 9 de ce capteur 4 reste solidaire de la roue, de la même manière que l'axe de référence RB de cette roue qui définit, avec l'axe de marche X X' du véhicule, l'angle de braquage.

Le capteur 6 est, lui, monté sur un support immobile par rapport au véhicule, de sorte que son axe de référence 10 est également immobile par rapport à l'axe de marche X X'. On peut donc écrire que, lors d'un changement d'orientation de la roue à contrôler, la variation de l'angle $\delta$ entre les axes de référence 9 et 10 des deux capteurs est égale, en valeur absolue, à la variation de l'angle de braquage β. Elle est toutefois de signe contraire si l'on adopte la convention selon laquelle les braquages sont négatifs dans le sens de l'ouverture.

Entre une première et une deuxième orientation de la roue, on peut écrire:

$$\beta_2 - \beta_1 = \delta_1 - \delta_2$$

Or dans le triangle ACD, formé par le fil tendu 5 (AC) et les prolongements des axes 9 et 10 jusqu'à leur point de croisement D:

$$\delta = \alpha + \gamma - 180°$$

Donc:

$$\beta_2 - \beta_1 = (\alpha_1 + \gamma_1) - (\alpha_2 + \gamma_2)$$

La mesure de la variation de la somme des angles $\alpha$ et $\gamma$, entre deux orientations de la roue à contrôler, permet donc de connaître la variation de l'angle de braquage β, qui lui est égale et de signe contraire.

Dans l'exemple de réalisation représenté schématiquement sur la figure 2, cette mesure est effectuée au moyen de deux capteurs capacitifs de type différentiel, qui sont montés chacun à l'intérieur d'un boîtier, respectivement 12 et 14. Chacun de ces capteurs comporte deux plaques isolantes 16 comportant, sur leurs faces en regard, deux groupes circulaires respectifs d'armatures, les armatures alternées des deux groupes étant reliées à un conducteur commun. Entre ces plaques est monté un élément étoilé 18 constituant des armatures qui coopèrent respectivement avec des paires adjacentes d'armatures des plaques pour constituer des condensateurs. Les plaques 16 et l'élément étoilé 18 sont montés sur un axe commun. En outre, l'un des éléments, par exemple les plaques 16, est fixé au boîtier 12 tandis que l'autre, l'élément étoilé, est solidaire d'une tige plate 20 traversant une fente 21 du boîtier et solidaire du fil élastique 5 de liaison au capteur 6 contenu dans le boîtier 14.

Le boîtier 12 est solidaire d'un axe 22 de montage sur une prise de jante 24 montée sur la roue 1 à contrôler. Cet axe 22 est solidaire angulairement de la prise de jante mais libre en rotation par rapport à celle-ci. Ainsi tout déplacement angulaire de la roue 1 est transmis au boîtier 12 et fait tourner les plaques 16 par rapport à l'élément étoilé 18, ce qui modifie la capacité du capteur. Cette capacité est transmise par un circuit électrique approprié (non représenté) à un calculateur électronique 26 qui affiche l'angle correspondant mesuré par le capteur.

Le pivotement du boîtier 12 déplace également l'axe des plaques et, par suite, l'élément étoilé 18, qui entraîne la tige 20 et modifie l'effort exercé sur le fil 5. Celui-ci présente une élasticité suffisante pour rester toujours tendu et maintenir alignées les tiges 20 des deux capteurs.

Le capteur 6 est lui aussi relié au calculateur 26 qui affiche l'angle qu'il mesure ainsi que la somme des angles mesurés par les deux capteurs, ce qui permet de connaître la variation de cette somme entre deux orientations de la roue 1 et, par suite, la variation de l'angle de braquage.

Le boîtier 14 est, dans le mode de réalisation des figures 1 et 2, fixé directement sur la caisse du véhicule mais il pourrait également être monté au moyen d'une prise de jante sur la roue arrière située du même côté que la roue à contrôler. La figure 3 montre un exemple de cette réalisation. Comme dans le cas de la figure 1, l'axe de référence 10 du capteur 6 est monté sur un support immobile par rapport au véhicule, la roue arrière 32 restant immobile. La mesure des variations de l'angle de braquage s'effectue donc exactement de la même manière que précédemment.

Dans certains cas il peut d'ailleurs être avantageux d'utiliser, pour le contrôle d'un train roulant un dispositif de mesure comportant, comme représenté sur la figure 3, deux paires de capteurs 4, 6 et 34, 36 reliés par un fil tendu 5, 35, qui sont montées chacune d'un côté du véhicule et sont reliées toutes les deux au calculateur électronique 26 qui indique les sommes des angles mesurés de chaque côté.

Un tel dispositif à quatre capteurs permet en outre de déterminer la configuration de marche en ligne droite du véhicule, c'est-à-dire la configuration de braquage nul. Dans ce but, comme le montre la figure 4, on utilise un dispositif de mesure comportant deux capteurs d'angle 43, 44 montés sur les roues avant, et deux capteurs d'angle 46, 47 fixés sur les roues arrière, les capteurs situés d'un même côté étant reliés par un fil élastique tendu 45. Dans ce cas, les capteurs avant 43 et 44 sont de construction symétrique, c'est-à-dire ont des axes de référence 49 de même longueur qui font le même angle avec l'axe de référence de la roue correspondante. De même, les capteurs arrière 46, 47 sont de construction symétrique.

Etant donné que dans la configuration de marche en ligne droite le plan bissecteur des axes de roues avant Y Y' est parallèle au plan bissecteur des axes de roues arrière X X', la somme des angles $\alpha$, $\gamma$ ou $\alpha'$, $\gamma'$ mesurés par les deux capteurs de chaque côté du véhicule est la même, et l'on peut écrire:

$$\alpha + \gamma = \alpha' + \gamma'$$

Un simple déplacement des roues avant 1, 31 jusqu'à ce qu'on obtienne cette égalité permet de déterminer avec précision et sécurité la position de braquage nul.

Cette position peut ensuite servir de position de référence pour la mesure de l'angle de braquage dans diverses orientations de l'une ou l'autre des roues avant 1, 31.

Bien entendu, les mesures d'angle de braquage sont, chaque fois que cela est nécessaire, corrigées, des erreurs pouvant provenir des voiles de roue et/ou des obliquités des capteurs, suivant une procédure connue telle que celle consistant à effectuer deux mesures successives après rotation de la roue de 180° autour de son axe propre.

La position de référence de la mesure des variations d'angle de braquage peut être toute position appropriée, bien que la configuration de marche en ligne droite soit la position préférée.

Dans tous les cas, la mesure peut être effectuée de manière simple et rapide, avec une grande précision, grâce à un dispositif sûr et aisé à mettre en place. Le dispositif et le procédé de l'invention permettent en outre, non seulement de mesurer toutes variations de l'angle de braquage entre deux positions, mais encore de déterminer la valeur de cet angle à partir de la position de braquage nul.

**Revendications**

1. Procédé de mesure de l'angle de braquage d'une roue avant de véhicule automobile par rapport à une position de référence, caractérisé en ce qu'il consiste à monter, de manière connue en soi, un premier dispositif électrique mesureur d'angle (4) sur la roue (1), un second dispositif électrique mesureur d'angle (6), sensiblement à la même hauteur, sur un support (8, 32) immobile par rapport au véhicule, et entre ces dispositifs, un fil tendu (5, 45), sensiblement horizontal, à déterminer la somme des deux angles ($\alpha$ et $\gamma$) mesurés dans une première orientation de la roue choisie comme position de référence, puis dans une deuxième orientation correspondant à la position de contrôle, à déterminer la variation de cette somme ($\alpha + \gamma$) entre les deux positions, et à en déduire l'angle de braquage qui est égal et de signe contraire à cette variation, étant admis que le braquage est positif dans le sens du pincement.

2. Procédé suivant la revendication 1, caractérisé en ce que la position de référence est la position dans la configuration de marche en ligne droite, de sorte que l'angle de braquage est déterminé par rapport à l'axe de marche.

3. Procédé suivant la revendication 2, caractérisé en ce qu'on détermine préalablement la configuration de marche en ligne droite en montant, de manière connue en soi, sur les deux roues avant (1, 31) des dispositifs mesureurs d'angle (43, 44) de constructions symétriques, sur les roues arrière, à la même hauteur, deux dispositifs mesureurs d'angle (46, 47) de constructions symétriques, et entre les deux dispositifs mesureurs d'angle, situés d'un même côté, un fil tendu sensiblement horizontal (5, 45), en comparant les sommes des deux angles mesuré ($\alpha'_0 + \gamma'_0 - \alpha_0 + \gamma_0$) de chaque côté du véhicule et en déplaçant les roues jusqu'au moment où ces deux sommes sont égales, ce qui correspond au braquage nul.

4. Procédé suivant l'une des revendications 1 et 2, caractérisé en ce que le support (8) immobile par rapport au véhicule est une partie de la caisse.

5. Procédé suivant l'une des revendications 1 et 2, caractérisé en ce que le support immobile est la roue arrière située du même côté du véhicule.

6. Procédé suivant l'une des revendications 1 à 5, caractérisé en ce que les mesures d'angle sont corrigées des erreurs pouvant provenir d'un voile de roues et/ou d'une obliquité des dispositifs mesureurs d'angle.

7. Dispositif de contrôle de train roulant comportant deux dispositifs électriques mesureurs d'angle (4, 6; 34, 36), qui sont reliés entre eux par un organe tendu (5) et qui sont montés sensiblement dans le même plan horizontal, l'un de ces dispositifs (4, 34) étant relié rigidement à la roue à contrôler, tandis que l'autre (6, 36) est relié rigidement à un support immobile par rapport au véhicule, caractérisé en ce qu'il comporte des moyens de mesure de la somme des angles mesurés par les deux dispositifs mesureurs d'angle pour chaque orientation de la roue, et des moyens de détermination de la variation de cette somme qui correspond à la variation de l'angle de braquage.

8. Dispositif suivant la revendication 7, caractérisé en ce qu'il comporte deux dispositifs mesureurs d'angle (43, 44) montés de manière symétrique sur les deux roues avant (1, 31) et deux dispositifs mesureurs d'angle (46, 47) fixés de manière symétrique sur les deux roues arrière, de sorte qu'en position de braquage nul les sommes $(\alpha + \gamma)$ des angles mesurés de chaque côté sont égales.

## Patentansprüche

1. Verfahren zum Messen des Einschlagwinkels eines Vorderrades eines Kraftfahrzeuges gegenüber einer Bezugsstellung, dadurch gekennzeichnet, dass es besteht aus dem Montieren in an sich bekannter Weise einer ersten elektrischen Winkelmessvorrichtung (4) auf dem Rad (1), einer zweiten elektrischen Winkelmessvorrichtung (6) in ungefähr der gleichen Höhe auf einer gegenüber dem Fahrzeug unbeweglichen Stütze (8, 32), und zwischen diesen Vorrichtungen, eines im wesentlichen horizontal gespannten Drahtes (5, 45) zum Bestimmen der Summe der bei einer als Bezugsstellung gewählten ersten Ausrichtung des Rades gemessenen beiden Winkel ($\alpha$ und $\gamma$), dann in einer zweiten, der Steuerstellung entsprechenden Ausrichtung zum Bestimmen der Schwankung dieser Summe ($\alpha$ und $\gamma$) zwischen den beiden Stellungen und Ableiten des Einschlagwinkels, der gleich und dem Vorzeichen nach dieser Abweichung entgegengesetzt ist, unter der Annahme, dass der Einschlag in Richtung der Vorspur positiv ist.

2. Verfahren nach Anspruch 1, dadurch gekennzeichnet, dass die Bezugsstellung die Stellung in der Fahrlage bei Geradeausfahrt mit der Massgabe ist, dass der Einschlagwinkel in bezug auf die Fahrtrichtung bestimmt wird.

3. Verfahren nach Anspruch 2, dadurch gekennzeichnet, dass man die Fahrlage bei Geradeausfahrt zuvor dadurch bestimmt, dass man Winkelmessvorrichtungen (43, 44) symmetrischer Konstruktion auf den beiden Vorderrädern (1, 31) zwei Winkelmessvorrichtungen (46, 47) symmetrischer Konstruktion auf gleicher Höhe auf den Hinterrädern und zwischen den beiden auf der gleichen Seite angeordneten Winkelmessvorrichtungen einen im wesentlichen horizontal gespannten Draht (5, 45) in an sich bekannter Weise montiert, dass man die Summe der beiden gemessenen Winkel ($\alpha'_0 + \gamma'_0 - \alpha_0 + \gamma_0$) jeder

Fahrzeugseite vergleicht und die Räder bis zu demjenigen Zeitpunkt bewegt, in dem die beiden Summen gleich sind, was einem Einschlag Null entspricht.

4. Verfahren nach einem der Ansprüche 1 und 2, dadurch gekennzeichnet, dass die gegenüber dem Fahrzeug unbewegliche Stütze (8) ein Teil der Karosserie ist.

5. Verfahren nach einem der Ansprüche 1 und 2, dadurch gekennzeichnet, dass die unbewegliche Stütze das auf der gleichen Seite des Fahrzeuges befindliche Hinterrad ist.

6. Verfahren nach einem der Ansprüche 1 bis 5, dadurch gekennzeichnet, dass die Winkelmessungen von Fehlern berichtigt werden, die von einem Schlagen der Räder und/oder einer Schräglage der Winkelmessvorrichtungen stammen können.

7. Fahrwerk-Prüfvorrichtung mit zwei elektrischen Winkelmessvorrichtungen (4, 6; 34, 36), die untereinander über ein gespanntes Organ (5) verbunden und in im wesentlichen der gleichen horizontalen Ebene angeordnet sind, wobei eine dieser Vorrichtungen (4, 34) mit dem zu prüfenden Rad starr verbunden ist, während die andere (6, 36) mit einer gegenüber dem Fahrzeug stationären Stütze starr verbunden ist, dadurch gekennzeichnet, dass sie Mittel zum Messen der Summe der durch die Winkelmessvorrichtungen für jede Ausrichtung des Rades gemessenen Winkel und Mittel zum Bestimmen der Schwankung dieser Summe, die der Abweichung des Einschlagwinkels entspricht, enthält.

8. Vorrichtung nach Anspruch 7, dadurch gekennzeichnet, dass sie zwei in symmetrischer Art auf den beiden Vorderrädern (1, 31) montierte Winkelmessvorrichtungen (43, 44) und zwei auf den beiden Hinterrädern symmetrisch befestigte Winkelmessvorrichtungen (46, 47) enthält, so dass die Summe ($\alpha + \gamma$) der bei einem Einschlag Null auf jeder Seite gemessenen Winkel gleich ist.

## Claims

1. Method for measuring the turning angle of a front wheel of a motor vehicle relative to a reference position, characterized in that it comprises mounting in per se known manner a first electric angle-measuring device (4) on wheel (1) and fixing, substantially at the same height, a second electric angle-measuring device (6) on a support (8, 32) which is stationary relative to the vehicle, and between these devices, a substantially horizontal taut wire (5, 45) and determining the sum of the two angles ($\alpha$ and $\gamma$) measured in a first orientation of the wheel, chosen as a reference position, then in a second orientation corresponding to the inspection position, determining the variation of this sum ($\alpha + \gamma$) between the two positions, and deducing therefrom the turning angle which is equal to and of opposite sign to this variation, it being assumed tha the turning is positive in the toe-in direction.

2. Method according to claim 1, characterized in that the reference position is the position in the straightline travel configuration, so that the steering angle is determined with respect to the travelling axis.

3. Method according to claim 2, characterized in that it comprises previously determining the straight-line travel configuration by mounting in per se known manner on the two front wheels (1, 31), angle-measuring devices (43, 44) of symmetrical construction and also fixing at the same height two angle-measuring devices (46, 47) of symmetrical constructions on the rear wheels interconnecting the two angle-measuring devices located on the same side by a substantially horizontal taut wire (5, 45) and comparing the sums of the two measured angles $(\alpha'_0 + \gamma'_0 - \alpha_0 + \gamma_0)$ on each side of the vehicle and displacing the wheels until the moment at which these two sums are equal, which corresponds to zero turning.

4. Method according to one of the claims 1 and 2, characterized in that the support (8) which is stationary relative to the vehicle is a part of the body.

5. Method according to one of the claims 1 and 2, characterized in that the stationary support is the rear wheel located on the same side of the vehicle.

6. Method according to one of the claims 1 to 5, characterized in that the angle measurements are corrected, since errors might result from a deformation of the wheels and/or an obliqueness of the angle-measuring devices.

7. Device for inspecting a road set of wheels comprising two electric angle-measuring devices (4, 6; 34, 36) which are interconnected by a taut element (5) and which are mounted substantially in the same horizontal plane, one of these devices (4, 34) being rigidly connected to the wheel to be inspected while the other (6, 36) is rigidly connected to a support which is stationary relative to the vehicle, characterized in that it comprises means for measuring the sum of the angles measured by the two angle-measuring devices for each orientation of the wheel, and means for determining the variation of its sum which corresponds to the variation of the turning angle.

8. Device according to claim 7, characterized in that it comprises two angle-measuring devices (43, 44) mounted in a symmetrical manner on the two front wheels (1, 31) and two angle-measuring devices (46, 47) mounted in a symmetrical manner on the two rear wheels so that, in the zero wheel turning position, the sums $(\alpha + \gamma)$ of the measured angles on each side are equal.

## 1/2

FIG. 1

FIG. 4

FIG. 3

2/2

FIG. 2